# EUROPÄISCHE PATENTSCHRIFT

(11) **EP 3 215 946 B1**
(45) Veröffentlichungstag und Bekanntmachung des Hinweises auf die Patenterteilung: **13.05.2020**
(21) Anmeldenummer: 15771879.2
(22) Anmeldetag: 18.09.2015
(51) Int. Cl.: G06F 11/27, G08C 25/00, H04Q 9/00

(54) **ÜBERPRÜFUNGSVORRICHTUNG FÜR DATENAUFBEREITUNGSEINRICHTUNG**
CHECKING DEVICE FOR DATA PREPARATION DEVICE
DISPOSITIF DE VÉRIFICATION POUR SYSTÈME DE PRÉPARATION DE DONNÉES

(30) Priorität: 04.11.2014 DE 102014222479
(43) Veröffentlichungstag der Anmeldung: 13.09.2017
(73) Patentinhaber: Robert Bosch GmbH, 70442 Stuttgart (DE)
(72) Erfinder: PFAHLER, Christian, 72072 Tuebingen (DE); KALISCH, Matthias, 72766 Reutlingen (DE); HUSAINI, Ali Abbas, 72760 Reutlingen (DE)
(86) Internationale Anmeldenummer: PCT/EP2015/071429
(87) Internationale Veröffentlichungsnummer: WO 2016/071034

(56) Entgegenhaltungen:
- DE-A1- 4 108 417
- US-A1- 2003 035 473
- "TMS320DM646x DMSoC Serial Peripheral Interface (SPI) User's Guide", , 31. März 2011 (2011-03-31), XP055089722, Gefunden im Internet: URL:http://www.ti.com/lit/ug/spruer4b/spru er4b.pdf [gefunden am 2013-11-22]
- ARM: "PrimeCell UART (PL011) - Revision: r1p4 - Technical Reference Manual", INTERNET CITATION, 2000, XP007901821, Gefunden im Internet: URL:http://www.arm.com/pdfs/DDI0183F_uart_ pl011_r1p4_trm.pdf [gefunden am 2007-03-05]

## Beschreibung

Die Erfindung betrifft eine Überprüfungsvorrichtung für eine Datenaufbereitungseinrichtung. Die Erfindung betrifft ferner ein Verfahren zum Überprüfen einer Datenaufbereitungseinrichtung.

### Stand der Technik

Die Druckschrift US 2003/0035473 A1 offenbart einen Selbsttest-Schaltkreis zum Evaluieren eines Hochgeschwindigkeits-Interfaces, wobei ein Daten-Transceiver einen Selbsttest-Datengenerator zum Erzeugen von Testdaten aufweist.

Das Dokument "TMS320DM646x DMSoC Serial Peripheral Interface (SPI) User's Guide", 31. März 2011, XP055089722 offenbart einen Loopback-Testmodus für die SPI-Schnittstelle.

Das Dokument "ARM: PrimeCell UART (PL011) - Revision: r1p4 - Technical Reference Manual, 2000, XP007901821" offenbart einen Loopback-Testmodus für die UART (PL011)-Schnittstelle.

Periphere Sensoren im Automotive-Bereich für hochsicherheitskritische Anwendungen, wie zum Beispiel Airbag- und ESP-Systeme, übermitteln ihre Daten in der Regel mittels des PSI5-Protokolls (engl. Peripheral Sensor Interface 5) an ein zugeordnetes elektronisches Steuergerät im Kraftfahrzeug. Zur Aufbereitung der Sensordaten ist eine Aufbereitungseinheit vorgesehen.

Nachteilig erfolgt eine Überprüfung der genannten Aufbereitungseinheit nicht oder nur unzureichend, wodurch Fehler unter Umständen nicht erkannt und zu ungewollten sicherheitskritischen Ereignissen (z.B. Aktivieren des Airbags, Lenkeingriffe, usw.) im Kraftfahrzeug führen können.

### Offenbarung der Erfindung

Eine Aufgabe der Erfindung ist es daher, eine verbesserte Überprüfung einer Datenaufbereitungseinrichtung bereitzustellen.

Die Aufgabe wird gemäß einem ersten Aspekt gelöst mit einer Überprüfungsvorrichtung für eine Datenaufbereitungseinrichtung, aufweisend:
- ein Aufbereitungselement zum Aufbereiten von Sensordaten für eine Datenübertragung; und
- eine Vergleichseinrichtung zum Vergleichen der Sensordaten mit den aufbereiteten Sensordaten, wobei im Falle, dass die aufbereiteten Sensordaten nicht mit den Sensordaten übereinstimmen, ein Fehler der Datenaufbereitungseinrichtung erkannt wird.

Gemäß einem zweiten Aspekt wird die Aufgabe gelöst mit einem Verfahren zum Überprüfen einer Datenaufbereitungseinrichtung, aufweisend die Schritte:
- Aufbereiten von Sensordaten mittels eines Datenaufbereitungselements;
- Vergleichen der aufbereiteten Daten mit den Sensordaten mittels einer Vergleichseinrichtung, und im Falle, dass die aufbereiteten Daten nicht mit den Sensordaten übereinstimmen,
- Erkennen eines Fehlers der Datenaufbereitungseinrichtung.

Bevorzugte Ausführungsformen der Überprüfungsvorrichtung und des Verfahrens sind Gegenstand von abhängigen Ansprüchen.

Eine vorteilhafte Weiterbildung der Überprüfungsvorrichtung zeichnet sich dadurch aus, dass der Fehler an ein Steuergerät signalisiert wird. Auf diese Weise wird das Steuergerät von einer Fehlfunktion der Aufbereitungseinrichtung informiert, wodurch ungewollte sicherheitskritische Aktionen unterbleiben.

Eine weitere vorteilhafte Weiterbildung der Überprüfungsvorrichtung ist dadurch gekennzeichnet, dass mittels der Vergleichseinrichtung ein bitweiser Vergleich der Sensordaten mit den aufbereiteten Daten durchführbar ist. Dadurch ist eine effiziente und gründliche Überprüfung der Funktionalität der Aufbereitungseinrichtung unterstützt.

Eine weitere vorteilhafte Weiterbildung der Überprüfungsvorrichtung zeichnet sich dadurch aus, dass ein permanenter oder transienter Fehler der Datenaufbereitungseinrichtung detektierbar ist. Dadurch können vorteilhaft unterschiedliche Fehlerarten der Überprüfungsvorrichtung erkannt werden.

Eine weitere vorteilhafte Weiterbildung der Überprüfungsvorrichtung zeichnet sich dadurch aus, dass die Überprüfungsvorrichtung im Sensor oder in einem Steuergerät angeordnet ist. Damit kann vorteilhaft eine technische Implementation der Überprüfungsvorrichtung variiert werden.

Eine weitere vorteilhafte Weiterbildung der Überprüfungsvorrichtung zeichnet sich dadurch aus, dass die Datenaufbereitungseinrichtung die Daten nach dem PSI5-Protokoll aufbereitet. Dadurch wird eine Überprüfung einer Datenaufbereitungseinrichtung eines sicherheitskritischen Protokolls durchgeführt, bei dem fehlerhafte Daten schwerwiegende Konsequenzen haben könnten. Eine Sicherheitsstufe des Kraftfahrzeugs im Betrieb ist auf diese Weise vorteilhaft erhöht.

Die Erfindung wird nachfolgend mit weiteren Merkmalen und Vorteilen anhand von zwei Figuren im Detail beschrieben. Dabei bilden alle offenbarten Merkmale, unabhängig von ihrer Darstellung in der Beschreibung und in den Figuren, sowie unabhängig von ihrer Rückbeziehung in den Patentansprüchen den Gegenstand der Erfindung. Die Figuren sind insbesondere für eine Erläuterung der erfindungswesentlichen Prinzipien gedacht.

In den Figuren zeigt:
- Fig. 1: ein Blockschaltbild einer Ausführungsform der erfindungsgemäßen Überprüfungsvorrichtung; und
- Fig. 2: einen prinzipiellen Ablauf einer Ausführungsform des erfindungsgemäßen Verfahrens.

### Beschreibung von Ausführungsformen

Das PSI5-Protokoll definiert eine digitale Stromschnittstelle, die für eine Datenübertragung von Sensordaten (z.B. in einem Kraftfahrzeug) eine Zweidrahtleitung verwendet. Unterstützt werden Datenübertragungen über Punkt-zu-Punkt-Konfigurationen sowie Buskonfigurationen mit asynchroner und synchroner Kommunikation. Sämtliche Informationen werden über die Ströme übertragen. Durch den relativ hohen elektrischen Signalstrom von 26mA und eine Bitkodierung im Manchester-Code kann eine hohe Störsicherheit erreicht werden, wodurch der Einsatz der kostengünstigen, verdrillten Zweidrahtleitung zur Verkabelung ausreichend ist.

In hochsicherheitskritischen Applikationen im Kraftfahrzeug, wie sie beispielsweise in der Norm ISO 26262 mit einer ASIL-D Stufe (engl. automotive safety integrity level) definiert sind, können Fehler zu einem ungewollten Auslösen des Airbags, zu Brems- oder Lenkeingriffen oder zu anderen kritischen Aktionen führen. Bisherige bekannte Konzepte verwenden entweder gar keine oder nur eine geringe Überwachung der PSI5-Aufbereitungseinheit, beispielsweise mittels Watchdog-Mechanismen im Falle einer Implementation der PSI5-Aufbereitungseinheit als ein Mikrocontroller-System.

Mittels der Erfindung wird ein Vergleichsprozess vorgeschlagen, der die PSI5-aufbereiteten Daten mit den ursprünglichen, vom Sensor gelieferten Daten vergleicht und im Fehlerfalle einen Fehler erkennt und signalisiert.

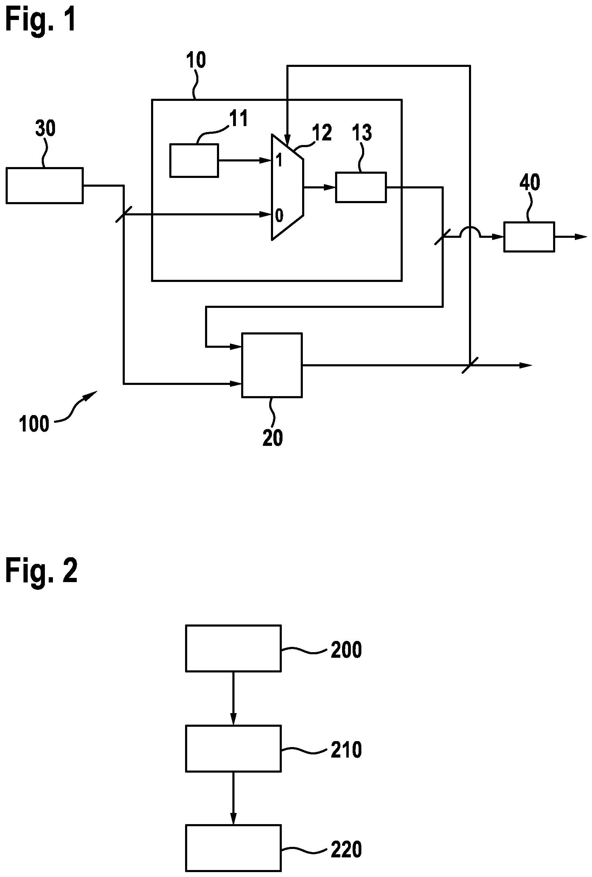

Fig. 1 zeigt ein Blockschaltbild einer Ausführungsform einer erfindungsgemäßen Überprüfungsvorrichtung 100 mit einem beispielhaften Szenario eines Airbag-Sensorsystems eines Kraftfahrzeugs. Ursprüngliche, von einem Sensor (z.B. ein Airbag-Sensor) stammende Sensordaten 30 (z.B. in Form eines Datenworts) werden einer Datenaufbereitungseinrichtung 10 zugeführt. Die Sensordaten 30 werden ferner einem Multiplexer 12 der Aufbereitungseinrichtung 10 zugeführt. Die ursprünglichen Sensordaten 30 werden zusätzlich auch einer Vergleichseinrichtung 20 zugeführt, wobei der Vergleichseinrichtung 20 auch ein Ausgangssignal eines Aufbereitungselements 13 der Datenaufbereitungseinrichtung 10 zugeführt wird.

Mittels der Vergleichseinrichtung 20 wird ein bitweises Vergleichen der ursprünglichen Sensordaten 30 mit den vom Aufbereitungselement 13 aufbereiteten Daten durchgeführt, wobei zu diesem Zweck von der Vergleichseinrichtung 20 zunächst ein entsprechendes Rück-Codieren der Daten durchgeführt wird.

Im Falle, dass die Vergleichseinrichtung 20 keinen Fehler erkennt, werden an den Multiplexer 12 die unverfälschten Sensordaten 30 zugeführt, woraufhin von dem Aufbereitungselement 13 die Sensordaten 30 aufbereitet und als PSI5-Daten 40 an das Steuergerät (nicht dargestellt) übermittelt werden. Die PSI5-Daten 40 sind Manchester-codiert und werden vom Steuergerät für entsprechende Aktionen verwendet.

In einem Fehlerfall, der dem Multiplexer 12 durch das Ausgangssignal der Vergleichseinrichtung 20 signalisiert wird, werden dem Multiplexer 12 Fehlercodes eines Fehlercodierers 11 zugeführt. Dies ist der Fall, wenn die ursprünglichen Sensordaten 30 mit den von der Datenaufbereitungseinrichtung 10 aufbereiteten Daten nicht mehr übereinstimmen, wodurch eine ordnungsgemäße Funktionalität der Datenaufbereitungseinrichtung 10 nicht mehr vorliegt.

In diesem Fall wird von der Vergleichseinrichtung 20 ein Fehler erkannt, als dessen Konsequenz vom Multiplexer 12 ein Fehlercode des Fehlercodierers 11 an das Aufbereitungselement 13 zugeführt wird. Ferner wird der Fehlerfall von der Vergleichseinrichtung 20 an das Steuergerät signalisiert. Aufgrund der Signalisierung durch die Vergleichseinrichtung 20 kann das Steuergerät erkennen, dass die vom Datenaufbereitungselement 13 aufbereiteten PSI5-Daten 40 korrupt sind und auf eine fehlerhafte Funktionalität der Datenaufbereitungseinrichtung 10 hinweisen. Im Ergebnis wird dadurch vorteilhaft eine entsprechende Aktion des Steuergeräts initiiert oder unterlassen.

Zum Beispiel kann bei einem Beschleunigungswert eines in einem Stoßfänger angeordneten Beschleunigungssensors, der von der Datenaufbereitungseinrichtung 10 falsch aufbereitet wird, von einem Aktivieren eines Airbags abgesehen werden.

Dabei können sowohl ein systemischer bzw. ein permanenter Fehler der Datenaufbereitungseinrichtung 10 erkannt werden. Alternativ ist es auch möglich, dass der Fehler der Datenaufbereitungseinrichtung 10 transienter Natur ist, wodurch von der Vergleichseinrichtung 20 das Signalisieren des Fehlers nach Beendigung des Fehlerfalls wieder beendet wird.

Im erkannten Fehlerfall kann das Steuergerät zu einer Fehlerbehebung beispielsweise versuchen, den Sensor neu zu starten bzw. zurückzusetzen.

Vorteilhaft ist die Erfindung für jegliche Sensoren im Automotive-Bereich verwendbar, die selbstständig eine Fehlerbehebungsaktion generieren können. Eine technische Implementation der erfindungsgemäßen Überprüfungsvorrichtung kann beispielsweise in einer zusätzlichen elektronischen Verschaltung oder als ein externer separater Mikrocontroller erfolgen.

Fig. 2 zeigt einen prinzipiellen Ablauf einer Ausführung des erfindungsgemäßen Verfahrens.

In einem Schritt 200 wird ein Aufbereiten von Sensordaten 30 mittels eines Datenaufbereitungselements 13 durchgeführt.

In einem Schritt 210 werden die aufbereiteten Daten mit den Sensordaten 30 mittels einer Vergleichseinrichtung 20 verglichen, wobei im Falle, dass die aufbereiteten Daten nicht mit den Sensordaten 30 übereinstimmen, in einem Schritt 220 ein Fehler der Datenaufbereitungseinrichtung 10 erkannt wird.

Zusammenfassend wird mit der vorliegenden Erfindung eine Überprüfung einer Datenaufbereitungseinrichtung, insbesondere einer Datenaufbereitungseinrichtung für ein PSI5-Datenübertragungsprotokoll, bereitgestellt. Aufgrund der Tatsache, dass bei Sensorsystemen im Automotive-Bereich entweder nur gültige Daten oder nur Fehlerdaten an zugeordnete Steuergeräte geschickt werden können, ist auf diese Weise eine effiziente Erkennung eines Fehlerfalls möglich. Vorteilhaft kann auf diese Weise unter Umständen ein rascher Austausch des fehlerhaften Sensorsystems in die Wege geleitet werden.

Obwohl die Erfindung vorgehend anhand von konkreten Ausführungsbeispielen beschrieben wurde, ist sie keineswegs darauf beschränkt. Der Fachmann wird somit vorgehend auch nicht oder nur teilweise beschriebene Ausführungsformen realisieren, ohne vom Kern der Erfindung abzuweichen.

## Patentansprüche

1. Überprüfungsvorrichtung (100) für eine Datenaufbereitungseinrichtung (10), aufweisend:
- ein Aufbereitungselement (13) zum Aufbereiten von Sensordaten (30) für eine Datenübertragung; und
- eine Vergleichseinrichtung (20) zum Vergleichen der Sensordaten (30) mit den aufbereiteten Sensordaten, wobei mittels der Vergleichseinrichtung (20) ein bitweiser Vergleich der Sensordaten (30) mit den aufbereiteten Sensordaten (30) durchführbar ist, wobei zu dem Zweck des bitweisen Vergleichs ein Rückcodieren zunächst durchgeführt wird, wobei im Falle, dass die aufbereiteten Sensordaten nicht mit den Sensordaten (30) übereinstimmen, ein Fehler der Datenaufbereitungseinrichtung (10) erkannt wird.

2. Überprüfungsvorrichtung (100) nach Anspruch 1, **dadurch gekennzeichnet, dass** ein permanenter oder transienter Fehler der Datenaufbereitungseinrichtung (10) detektierbar ist.

3. Überprüfungsvorrichtung (100) nach Anspruch 1 oder 2, **dadurch gekennzeichnet, dass** die Überprüfungsvorrichtung (100) in einem Sensor oder in einem Steuergerät angeordnet ist.

4. Überprüfungsvorrichtung (100) nach Anspruch 3, **dadurch gekennzeichnet, dass** der Fehler an das Steuergerät signalisierbar ist.

5. Überprüfungsvorrichtung (100) nach einem der vorhergehenden Ansprüche, **dadurch gekennzeichnet, dass** die Datenaufbereitungseinrichtung (10) die Daten (30) nach dem PSI5-Protokoll aufbereitet.

6. Verfahren zum Überprüfen einer Datenaufbereitungseinrichtung (10), aufweisend die Schritte:
- Aufbereiten von Sensordaten (30) mittels eines Datenaufbereitungselements (13);
- Vergleichen der aufbereiteten Daten mit den Sensordaten (30) mittels einer Vergleichseinrichtung (20), wobei die Sensordaten (30) mit den aufbereiteten Sensordaten (30) bitweise verglichen werden, wobei zu dem Zweck des bitweisen Vergleichs ein Rückcodieren zunächst durchgeführt wird und im Falle, dass die aufbereiteten Daten nicht mit den Sensordaten (30) übereinstimmen;
- Erkennen eines Fehlers der Datenaufbereitungseinrichtung (10).

7. Verfahren nach Anspruch 6, wobei die Sensordaten (30) nach dem PSI5-Protokoll aufbereitet werden.

8. Verfahren nach Anspruch 6 oder 7, wobei der Fehler an ein Steuergerät signalisiert wird.

## Claims

1. Checking apparatus (100) for a data conditioning device (10), having:
- a conditioning element (13) for conditioning sensor data (30) for a data transmission; and
- a comparison device (20) for comparing the sensor data (30) with the conditioned sensor data, wherein a bit-by-bit comparison of the sensor data (30) with the conditioned sensor data (30) is performable by means of the comparison device (20), wherein back-coding is first of all performed for the purpose of the bit-by-bit comparison, wherein an error in the data conditioning device (10) is detected if the conditioned sensor data are not concordant with the sensor data (30).

2. Checking apparatus (100) according to Claim 1, **characterized in that** a permanent or transient error in the data conditioning device (10) is detectable.

3. Checking apparatus (100) according to Claim 1 or 2, **characterized in that** the checking apparatus (100) is arranged in a sensor or in a control unit.

4. Checking apparatus (100) according to Claim 3, **characterized in that** the error is signallable to the control unit.

5. Checking apparatus (100) according to one of the preceding claims, **characterized in that** the data conditioning device (10) conditions the data (30) according to the PSI5 protocol.

6. Method for checking a data conditioning device (10), having the steps of:
- conditioning sensor data (30) by means of a data conditioning element (13);
- comparing the conditioned data with the sensor data (30) by means of a comparison device (20), wherein the sensor data (30) are compared with the conditioned sensor data (30) bit by bit, wherein back-coding is first of all performed for the purpose of the bit-by-bit comparison, and, if the conditioned data are not concordant with the sensor data (30);
- detecting an error in the data conditioning device (10) .

7. Method according to Claim 6, wherein the sensor data (30) are conditioned according to the PSI5 protocol.

8. Method according to Claim 6 or 7, wherein the error is signalled to a control unit.

## Revendications

1. Arrangement de vérification (100) pour un dispositif de préparation de données (10), comprenant
- un élément de préparation (13) destiné à préparer des données de capteur (30) pour une transmission de données ; et
- un dispositif de comparaison (20) destiné à comparer les données de capteur (30) avec les données de capteur préparées, une comparaison au niveau binaire des données de capteur (30) avec les données de capteur (30) préparées pouvant être effectuée au moyen du dispositif de comparaison (20), un rétrocodage étant tout d'abord effectué dans le but de la comparaison au niveau binaire et un défaut du dispositif de préparation de données (10) étant reconnu dans le cas où les données de capteur préparées ne coïncident pas avec les données de capteur (30) .

2. Arrangement de vérification (100) selon la revendication 1, **caractérisé en ce qu'**un défaut permanent ou transitoire du dispositif de préparation de données (10) peut être détecté.

3. Arrangement de vérification (100) selon la revendication 1 ou 2, **caractérisé en ce que** l'arrangement de vérification (100) est disposé dans un capteur ou dans un contrôleur.

4. Arrangement de vérification (100) selon la revendication 3, **caractérisé en ce que** le défaut peut être signalé au niveau du contrôleur.

5. Arrangement de vérification (100) selon l'une des revendications précédentes, **caractérisé en ce que** le dispositif de préparation de données (10) prépare les données (30) selon le protocole PSI5.

6. Procédé de vérification d'un dispositif de préparation de données (10), comprenant les étapes suivantes :
- préparation de données de capteur (30) au moyen d'un élément de préparation de données (13) ;
- comparaison des données préparées avec les données de capteur (30) au moyen d'un dispositif de comparaison (20), les données de capteur (30) étant comparées au niveau binaire avec les données de capteur (30) préparées, un rétrocodage étant tout d'abord effectué dans le but de la comparaison au niveau binaire et, dans le cas où les données de capteur préparées ne coïncident pas avec les données de capteur (30) ;
- reconnaissance d'un défaut du dispositif de préparation de données (10).

7. Procédé selon la revendication 6, les données de capteur (30) étant préparées selon le protocole PSI5.

8. Procédé selon la revendication 6 ou 7, le défaut étant signalé au niveau d'un contrôleur.
